# EUROPEAN PATENT APPLICATION

(11) **EP 2 165 801 A2**
(43) Date of publication of application: **24.03.2010**
(21) Application number: 09405135.6
(22) Date of filing: 12.08.2009
(51) Int. Cl.: B23Q 7/04, B23Q 11/08, B25J 9/16, B25J 5/02

(54) **Processing machine comprising a machine tool and a multijoint robot traveling on a rail**

(30) Priority: 08.09.2008 JP 2008230190
(71) Applicant: Yamazaki Mazak Corporation, Niwa gun, Aichi Pref. (JP)
(72) Inventor: Kitayama, Minoru, Niwa-gun Aichi pref. (JP); Tanaka, Naoya, Niwa-gun Aichi pref. (JP); Kawasaki, Kazuo, Niwa-gun Aichi pref. (JP); Eboshi, Koichi, Niwa-gun Aichi pref. (JP); Mine, Tomoko, Niwa-gun Aichi pref. (JP); Ryuta, Toraharu, Niwa-gun Aichi pref. (JP)
(74) Representative: Moinas, Michel

(57) **Abstract**

The invention provides a downsized processing machine, equipped with a machine tool and a multijoint robot. The processing machine 100 comprises a machine tool 10, a workpiece pallet 70 and a gantry rail 120 disposed above the machine tool 10. A multijoint robot 130 traveling on the gantry rail 120 is equipped with a dual-partitioning electron system speed monitoring function. Through use of this function, the range of movement D₂ of the multijoint robot 130 is controlled to fit within the inner side of a front cover 11 of the machine tool 10, according to which the safety barrier 180 can be downsized. This arrangement enables the operator to open or close a door 12 of the machine tool 10 and to manipulate a control panel 16 even when the multijoint robot is in operation, and the footprint of the machine can be minimized.

## Description

### Field of the invention

The present invention relates to a processing machine comprising a machine tool and a multijoint robot for transferring objects such as workpieces.

### Description of the related art

Processing machines in which machine tools and workpiece transfer robots are combined are disclosed for example in Japanese patent application laid-open publications No. 05-285800 (patent document 1) filed by the present applicant, No. 08-174449 (patent document 2), and No. 2002-178238 (patent document 3).

The combination of a machine tool and a multijoint robot enables to expand the range of movement of the robot, so that the robot can be applied to a wider area of operation.

However, if a multijoint robot is adopted to expand the range of movement of the robot, the safety barriers for protecting the operators of the machine tool must also have greater size.

The operators of machine tools must manipulate control panels of machines and monitor the state of machining of the workpieces or the state of chips formed during cutting operation. If the safety barrier for the multijoint robots is disposed close to the operator outside the cover of the machine tool, there is a drawback that the visibility of the processing area of the machine tool is deteriorated. Further, the existence of the safety barrier makes the access of the operator to the processing area difficult, by which the workability is deteriorated.

Another drawback of the prior art is that the safety barrier increases the footprint of the whole processing machine.

### SUMMARY OF THE INVENTION

The present invention aims at solving the problems of the prior art by providing a processing machine in which a multijoint robot having a wide area of movement and a machine tool are combined, having a downsized safety barrier.

In order to achieve the above object, the present invention provides a processing machine comprising a machine tool, a workpiece pallet disposed on a side portion of the machine tool, a gantry rail disposed above the machine tool and connecting the machine tool and the pallet, a multijoint robot traveling on the gantry rail, and a control unit of the multijoint robot, wherein the control unit of the multijoint robot has a dual-partitioning electron system speed monitoring function, and the range of movement of the multijoint robot is restricted to an inner side of a front cover of the machine tool via the dual-partitioning electron system speed monitoring function.

The processing machine further comprises a safety barrier disposed adjacent to the machine tool, and the safety barrier covers a portion excluding the front cover of the machine tool.

According further to the processing machine of the present invention, the multijoint robot comprises a robot base traveling on the gantry rail, a first arm connected via a first joint to the robot base, a second arm connected via a second joint to the first arm, and a robot hand connected via a third joint to an end of the second arm, wherein the robot hand grips a workpiece and transfers the same between the machine tool and the pallet.

The present invention having the arrangements mentioned above provides a processing machine utilizing a general-purpose multijoint robot capable of reducing the safety barrier and minimizing the footprint of the machine.

### BRIEF DESCRIPTION OF THE DRAWINGS

FIG. 1 is an external view of the processing machine including a multijoint robot;
FIG. 2A is a front view, FIG. 2B is a plan view and FIG. 2C is a side view of the processing machine according to FIG. 1;
FIG. 3 is an external view of the processing machine according to the present invention; and
FIG. 4A is a front view, FIG. 4B is a plan view and FIG. 4C is a side view of the processing machine according to FIG. 3.

### DETAILED DESCRIPTION OF THE PREFERRED EMBODIMENTS

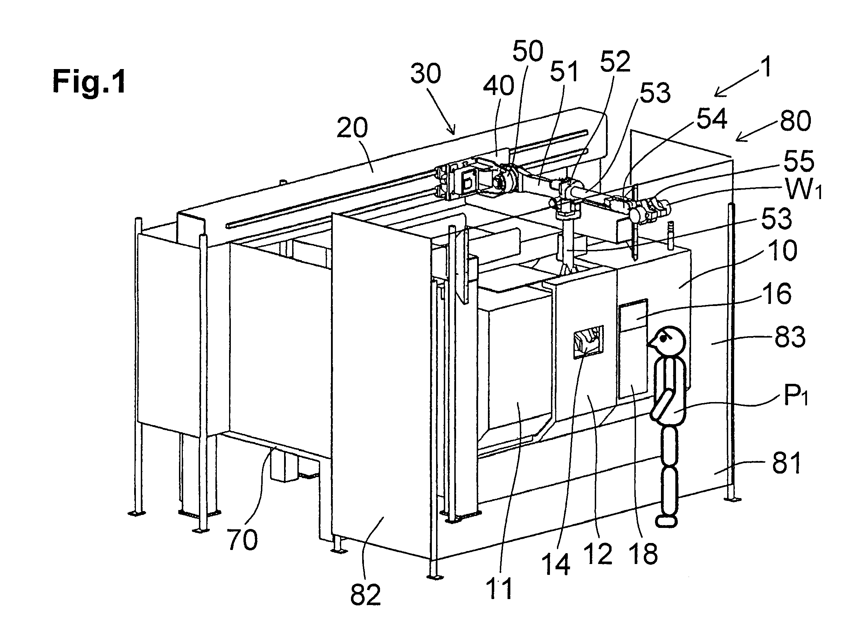

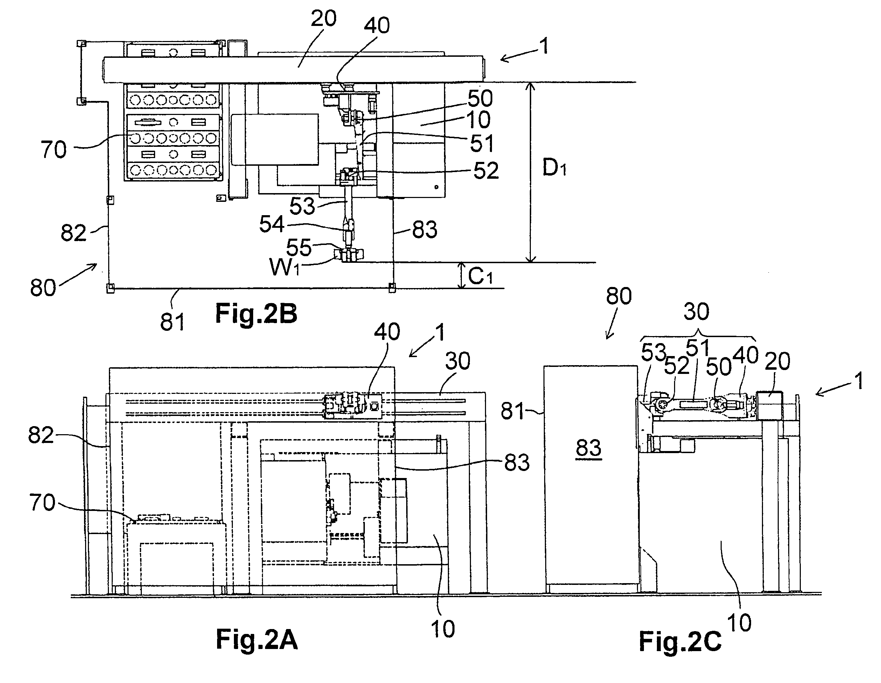

FIG. 1 is an external view showing a processing machine in which a machine tool and a multijoint robot are combined, and FIGS. 2A, 2B and 2C are front, plan and side views thereof.

The processing machine denoted as a whole by reference number 1 comprises a machine tool 10, a multijoint robot 30 traveling on a gantry rail 20 disposed on the upper portion of the machine tool 10 and an NC control unit.

The machine tool can be a lathe-type machining center, for example, including a workpiece feeding/ejecting palette 70 disposed on the side portion of the machine tool. The gantry rail 20 covers the machine tool 10 and the palette 70.

The multijoint robot 30 traveling on the gantry rail 20 includes a robot base 40, and the robot base 40 has a first arm 51 connected thereto via a first joint 50. The first arm 51 has a second arm 53 connected thereto via a second joint 52, and on the end of the second arm 53 is attached a robot hand 55 via a third joint 54. The robot hand 55 grips a workpiece W₁, feeds the same to the machine tool 10 and ejects the same.

As shown in the plan view of FIG. 2B, the leading end of the hand 55 of the multijoint robot 30 can be moved within a maximum dimension D₁ from the base 40. If the dimension D₁ protrudes from a front cover 11 of the machine tool 10, it is necessary to provide a front barrier (front cover) 81 of a safety barrier (safety cover) 80 at a position determined by adding a clearance C₁ to the dimension D₁.

The safety barrier 80 is composed of a front barrier 81 and side barriers 82 and 83.

If the front barrier (front cover) 81 is disposed close to the operator P₁ outside the front side of the machine tool 10, the operator P₁ will not be able to access the slide door 12 of the machine tool 10, and will have difficulty when monitoring the machining area through a window 14 on the door 12. Further, the operator will not be able to manipulate a control panel 16 on the NC unit 18 of the machine tool 10.

The above-mentioned problems can be solved by preparing a multijoint robot having arms 51 and 53 with shorter dimensions so that the range of movement thereof is restricted to the inner side of the machine tool 10.

However, such arrangement is not rational, since a large variety of multijoint robots must be prepared in correspondence to the sizes of machine tools.

Further, depending on the actual uses of the machine tool, the limitation of the range of movement of the robot may deteriorate the functions of the robot.

Therefore, the present invention provides a new processing machine having a multijoint robot with a dual-partitioning electron system speed monitoring control function.

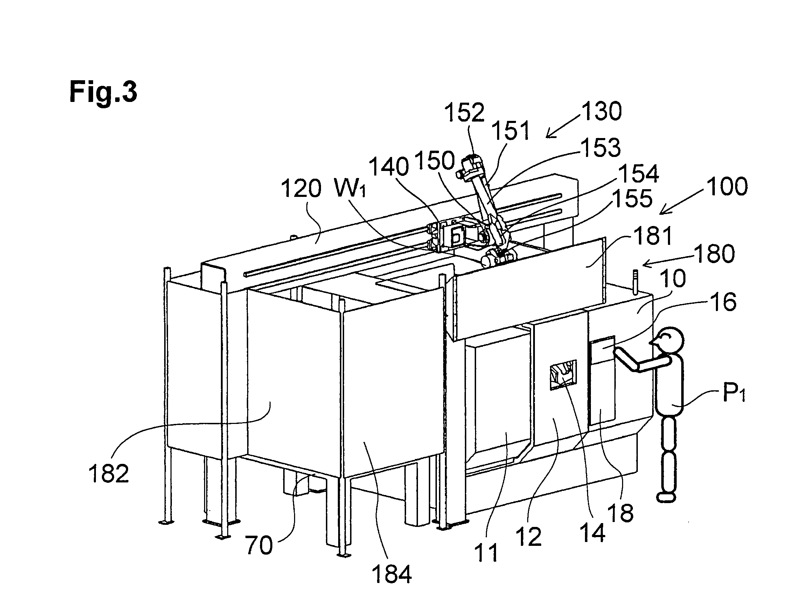

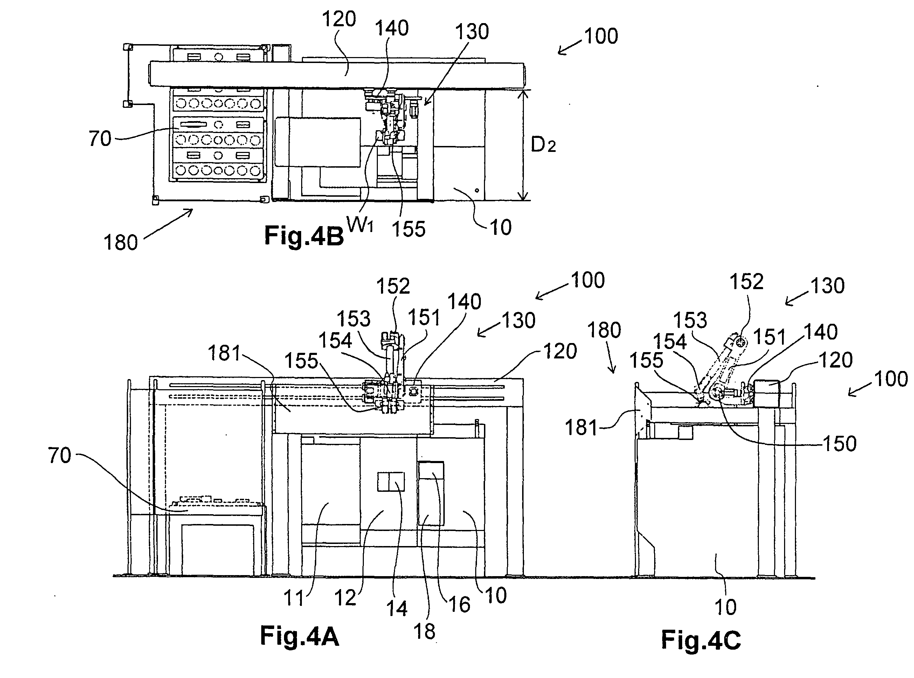

FIG. 3 is an external view showing the processing machine according to the present invention, and FIG. 4A, 4B and 4C are front, plan and side views thereof.

The processing machine denoted as a whole by reference number 100 comprises a machine tool 10, and a multijoint robot 130 having a dual-partitioning electron system speed monitoring control function and traveling on a gantry rail 120 disposed above the machine tool 10. The dual-partitioning electron system speed monitoring control function is equipped within the NC control unit of the multijoint robot.

The multijoint robot 130 having the dual-partitioning electron system speed monitoring control function and traveling on the gantry rail 120 comprises a robot base 140, and the robot base 140 has a first arm 151 connected thereto via a first joint 150.

The first arm 151 has a second arm 153 connected thereto via a second joint 152, and on the leading end of the second arm 153 is attached a robot hand 155 connected thereto via a third joint 154.

The robot hand 155 grips a workpiece W₁, feeds the same to the machine tool 10, and ejects the same therefrom.

The dual-partitioning electron system speed monitoring control function of the multijoint robot 130 can be set so as to restrict the range of movement of the robot.

The dual-partitioning electron system speed monitoring control function is a safety function built into the NC for controlling the multijoint robot, which has two systems for doubly monitoring the position and speed of the motor and two ways for disconnecting power. The dual-partitioning electron system speed monitoring control function has superior safeness, complying with European safety standards.

Through use of the dual-partitioning electron system speed monitoring control function, as shown in FIG. 4B, the range of movement D₂ of the robot hand 155 is restricted to an area within the inner side of the front cover 11 of the machine tool 10.

By restricting the range of movement to the area as mentioned above, there is no longer any need to provide the front barrier 181 of a safety barrier 180 to a position covering the front side of the machine tool 10.

According to this arrangement, even when the multijoint robot 130 having the dual-partitioning electron system monitoring control function is in operation, the operator P₁ can monitor the machining area through the window 14 and manipulate the control panel 16 of the NC unit 18. Further, the footprint of the whole processing machine can be minimized.

## Claims

1. A processing machine comprising:
a machine tool;
a workpiece feeding/ejecting pallet disposed on a side portion of the machine tool;
a gantry rail disposed above the machine tool and connecting the machine tool and the pallet;
a multijoint robot traveling on the gantry rail and transferring a workpiece; and
a control unit of the multijoint robot, wherein the control unit of the multijoint robot has a dual-partitioning electron system speed monitoring function, and the range of movement of the multijoint robot is restricted to an inner side of a front cover of the machine tool via the dual-partitioning electron system speed monitoring function.

2. The processing machine according to claim 1, wherein
the machine tool is a lathe-type machining center.

3. The processing machine according to claim 1, wherein
a safety barrier is disposed adjacent to the machine tool, and the safety barrier covers a portion excluding the front cover of the machine tool.

4. The processing machine according to claim 1, wherein
the multijoint robot comprises a robot base traveling on the gantry rail, a first arm connected via a first joint to the robot base, a second arm connected via a second joint to the first arm, and a robot hand connected via a third joint to an end of the second arm, wherein the robot hand grips a workpiece and transfers the same between the machine tool and the pallet.
